# EUROPÄISCHE PATENTSCHRIFT

(11) **EP 4 636 361 B1**
(45) Veröffentlichungstag und Bekanntmachung des Hinweises auf die Patenterteilung: **18.03.2026**
(21) Anmeldenummer: 24171057.3
(22) Anmeldetag: 18.04.2024
(51) Int. Cl.: G01D 5/347, G01D 18/00

(54) **VORRICHTUNG UND VERFAHREN ZUR POSITIONS-, LÄNGEN- ODER WINKELBESTIMMUNG**
DEVICE AND METHOD FOR DETERMINING POSITION, LENGTH OR ANGLE
DISPOSITIF ET PROCÉDÉ DE DÉTERMINATION DE POSITION, DE LONGUEUR OU D'ANGLE

(43) Veröffentlichungstag der Anmeldung: 22.10.2025
(73) Patentinhaber: SICK AG, 79183 Waldkirch (DE)
(72) Erfinder: Sellmer, Dr., Christian, 78166 Donaueschingen (DE); Hirmer, Dr., Katrin, 78166 Donaueschingen (DE)
(74) Vertreter: Manitz Finsterwald Patent- und Rechtsanwaltspartnerschaft mbB

(56) Entgegenhaltungen:
- WO-A1-2017/043249
- DE-A1- 102016 101 965

## Beschreibung

Die vorliegende Erfindung betrifft eine Vorrichtung zur Positions-, Längen- oder Winkelbestimmung sowie ein entsprechendes Verfahren. Als Stand der Technik sei auf die DE 10 2016 101 965 A1 und die WO 2017 / 043 249 A1 verwiesen.

Vorrichtungen zur Positions-, Längen- oder Winkelbestimmung, die auch als Encoder bezeichnet werden, sowie entsprechende Verfahren können in einer Vielzahl von technischen Bereichen eingesetzt werden. Beispielsweise können solche Vorrichtungen in Werkzeugmaschinen Verwendung finden, wobei eine Positions- oder Winkelmessung eines Werkzeugs relativ zu dem Werkstück ermöglicht wird. Andere Einsatzbereiche sind Drehwinkelsensoren, beispielsweise für Motor-Feedback-Systeme.

Herkömmlicher Weise umfassen solche Vorrichtungen einen ersten und einen zweiten Teil, welche relativ zueinander bewegbar sind. An dem ersten Teil ist eine Codierung mit einer Vielzahl von Codeabschnitten erster Art und zweiter Art angeordnet. An dem zweiten Teil ist eine Auslesevorrichtung zur Erfassung zumindest eines Teils der Codierung angebracht, wobei die Auslesevorrichtung mehrere Sensoren umfasst, welche jeweils zur Erfassung der einzelnen Codeabschnitte ausgebildet sind und ein entsprechendes Ausgangssignal ausgeben. Ferner umfassen solche Vorrichtungen eine Messsignalerzeugungseinheit, welche ausgebildet ist, aus den jeweiligen Ausgangssignalen wenigstens ein entsprechendes Messsignal zu erzeugen, und eine Positionsermittlungseinheit, welche dazu ausgebildet ist, unter Berücksichtigung, insbesondere auf Basis, des wenigstens einen Messsignals eine Relativposition zwischen dem ersten und dem zweiten Teil zu ermitteln.

Dabei gibt es eine Vielzahl von Einflüssen, welche die Genauigkeit der Positionsermittlung negativ beeinflussen können. Diese reichen von systematischen Fehlern oder Variationen, wie beispielsweise Varianzen bei der konkreten Positionierung der einzelnen Sensoren und/oder deren Empfindlichkeit, über zufällig auftretende Einzelfehler, wie Bitfehler in vorgesehenen Analog-Digital-Umwandlern, bis hin zu alterungsbedingten Variationen, beispielsweise in Gestalt eines Abfalls der Empfindlichkeit der Sensoren über deren Lebenszyklus hinweg. Derartige Einflüsse können auf unterschiedlichste Weisen separat und/oder gemeinsam korrigiert werden.

Eine Aufgabe der vorliegenden Erfindung ist es, Vorrichtungen und Verfahren zu präsentieren, welche zumindest eine Auswahl dieser Einflüsse korrigieren.

Diese Aufgabe wird durch Vorrichtungen und Verfahren entsprechend den unabhängigen Ansprüchen gelöst. Weiterbildungen dieser sind den abhängigen Ansprüchen zu entnehmen.

Die erfindungsgemäße Vorrichtung zeichnet sich dadurch aus, dass sie ferner eine Korrektureinheit umfasst, welche dazu ausgebildet ist, eine, insbesondere direkte oder indirekte, Beeinflussung der Amplitude des wenigstens einen Messsignals zu bewirken, bevor dieses durch die Positionsermittlungseinheit zur Bestimmung der Relativposition herangezogen wird. Die Korrektureinheit ist ferner dazu ausgebildet, in einem Kalibrierungsdurchlauf eine vordefinierte, insbesondere konstante und/oder gleichbleibende, Beeinflussung der Messsignale zu bewirken sowie aus den Ausgangssignalen der Sensoren während des Kalibrierungsdurchlaufs ein Kalibrierungssignal zu erzeugen, den Verlauf des erzeugten Kalibrierungssignals mit einem vorgegebenen Referenzverlauf abzugleichen und aus dem Ergebnis des Abgleichs eine Korrekturtabelle und/oder einer Korrekturfunktion zu generieren. Schließlich ist die Korrektureinheit dazu ausgebildet, jenseits des Kalibrierungsdurchlaufs eine Beeinflussung des Verlaufs des wenigstens einen Messsignals entsprechend der generierten Korrekturtabelle und/oder Korrekturfunktion zu bewirken.

Erfindungsgemäß wird also ein Kalibrierungsdurchlauf durchgeführt, in welchem die Beeinflussung der Messsignale bekannt ist, wobei die Beeinflussung bevorzugt über den gesamten Kalibrierungsdurchlauf konstant bzw. unverändert ist. In dem so erzeugten Kalibrierungssignal können dann Abweichungen von einem idealen Verlauf erkannt werden. Diese können dann im nachfolgenden Betrieb (d.h. jenseits des Kalibrierungsdurchlaufs) mittels der Korrekturtabelle und/oder der Korrekturfunktion ausgeglichen werden.

Bei dem Kalibrierungsdurchlauf kann z.B. bei einem rotativen Encoder zumindest eine vollständige Umdrehung durchgeführt werden. Bei einem linearen Encoder kann zumindest einmalig der gesamte Verfahrbereich abgefahren werden. Bei einer periodischen Codierung ist es auch möglich nur einen Teil aller Perioden, insbesondere lediglich eine einzelne Periode, der Codierung zu durchlaufen. Allgemein kann in dem Kalibrierungsdurchlauf also jede Relativposition zwischen erstem und zweitem Teil zumindest einmal eingenommen werden.

Eine Beeinflussung des Verlaufs des Messsignals kann auf unterschiedliche Art und Weise erfolgen, wobei die Beeinflussung sowohl direkt als auch indirekt wirken kann. Beispielsweise kann bei einem optischen Encoder mit Photodioden als Sensoren, einer optisch wirksamen Codierung und einer zugehörigen Beleuchtung eine indirekte Beeinflussung des Verlaufs des Messsignals durch eine Variation der Beleuchtungsstärke erfolgen. Hierdurch erfolgt z.B. eine Variation der Amplitude der Messwerte zu unterschiedlichen Zeitpunkten.

Dementsprechend kann der Kalibrierungsdurchlauf beispielsweise mit konstanter Beleuchtungsstärke durch eine von der Korrektureinheit gesteuerte Beleuchtung erfolgen.

Bezüglich der Messsignalerzeugungseinheit sei festgestellt, dass diese auch in Gestalt eines Analog-Digital-Umsetzers ausgebildet sein kann und damit lediglich eine Digitalisierung von analogen Ausgangssignalen bewirken kann. In einer derartigen Ausgestaltung kann eine, z.B. direkte, Beeinflussung der Messsignale beispielsweise durch das Aufbringen eines Grundsignals auf die Ausgangssignale vor deren Digitalisierung, oder durch eine Variation der Schwellenwerte, welche durch den Analog-Digital-Umsetzer zur Digitalisierung der Ausgangssignale verwendet werden, erfolgen.

Die vordefinierte Beeinflussung während des Kalibrierungsdurchlaufs kann auch in Gestalt einer ausbleibenden Beeinflussung vorliegen. Hierbei geht es im Wesentlichen darum, dass der Kalibrierungsdurchlauf bei weitestmöglich klar definierten und bestimmten Bedingungen durchgeführt wird. Dies ist notwendig, um aus den Ausgangssignalen des Kalibrierungsdurchlaufs auch tatsächlich eine geeignete Korrekturfunktion und/oder Korrekturtabelle erzeugen zu können.

Das Kalibrierungssignal kann beispielsweise eine spezifische Kombination von analogen oder digitalisierten Ausgangssignalen unterschiedlicher Sensoren sein. Auch kann es sich bei dem Kalibrierungssignal lediglich um das analoge oder digitalisierte Ausgangssignal eines spezifischen der Sensoren, insbesondere in Gestalt eines Referenzsensors, handeln.

Der angesprochene Referenzverlauf zeigt einen als optimal angenommenen bzw. einen gewünschten Verlauf an, welcher sich beispielsweise aus einer Simulation der Vorrichtung unter Vernachlässigung jeglicher unerwünschter Einflüsse ergibt. Er zeigt also an, welchen Verlauf das Kalibrierungssignal im Optimalfall aufweisen soll.

Die schließlich erzeugte Korrekturtabelle und/oder Korrekturfunktion dient anschaulich gesprochen als Grundlage zur Erzeugung eines Korrektursignals, welches von der Korrektureinheit ausgegeben eine bestimmte Beeinflussung der Messsignale bewirkt. Diese Beeinflussung kann entsprechend der obigen Beispiele sowohl indirekt als auch direkt auf die Messsignale wirken. Eine indirekte Beeinflussung der Messsignale kann bei optischen Sensoren über eine Varianz der Beleuchtungsstärke erfolgen, während keine weitere Beeinflussung des Messsignals, beispielsweise durch eine Varianz von Schwellenwerten in einem Analog-Digital-Umwandler, erfolgt. Eine direkte Beeinflussung der Messsignale kann über eine Varianz von Schwellenwerten eines Analog-Digital-Umwandlers erfolgen und erlaubt es, auf eine indirekte Beeinflussung der Messsignale, insbesondere durch eine Varianz der Beleuchtungsstärke, zu verzichten. Diese Variante ist insbesondere bei zwei nebeneinander angeordneten Codierungen bzw. Codierungsspuren, konkret einer Inkrementalspur und einer Absolutspur, bei einer gemeinsamen Beleuchtung von Relevanz. Eine Varianz der gemeinsamen Beleuchtungsstärke basierend auf einer Korrekturtabelle und/oder -funktion, welche aus Messsignalen der einen Spur ermittelt wurde, könnte nämlich zu unerwünschten Variationen in den Messsignalen der weiteren Spur führen. Die durch die Korrekturtabelle und/oder Korrekturfunktion angezeigte Beeinflussung dient konkret dazu, unerwünschte Einflüsse, welche durch Abweichungen des Verlaufs des Kalibrierungssignals von dem Referenzsignal angezeigt werden, auszugleichen und damit eine Korrektur der Messsignale vorzunehmen. Die derart korrigierten Messsignale können dann durch die Positionsermittlungseinheit zur groben und/oder feinen Bestimmung der Relativposition herangezogen und ermöglichen ein genaueres Bestimmungsergebnis.

Die Besonderheit bei dieser Art der Korrektur liegt darin, dass eine unmittelbare Beeinflussung der Messsignale erfolgt und keine Korrektur innerhalb oder nach der Positionsermittlungseinheit. Damit ist die erfindungsgemäße Korrektur vergleichsweise einfach umzusetzen und sogar in Vorrichtungen aus dem Stand der Technik nachrüstbar.

Insbesondere ist hierbei die durch die Korrekturtabelle und/oder -funktion angezeigte bzw. definierte Beeinflussung des Messsignals abhängig von vorangehend ermittelten Informationen zur Relativposition zwischen den beiden Teilen. Mit anderen Worten, die vorzunehmende Korrektur ist bevorzugt abhängig von einer erwarteten bzw. geschätzten Relativposition zum Zeitpunkt der Korrektur.

An dieser Stelle sei auch darauf hingewiesen, dass der Kalibrierungsdurchlauf nicht nur vor Inbetriebnahme der Vorrichtung durchgeführt werden kann. Für den Kalibrierdurchlauf wird dann die vorgenommene Korrektur der Messsignale abgeschaltet und die Beleuchtung konstant gehalten. Nach einem Kalibrierungsdurchlauf von insbesondere einer Periode Länge wird dann wieder auf den geregelten "Normalbetrieb" umgeschaltet, wobei nachfolgend dann die korrigierte Korrekturtabelle und/oder Korrekturfunktion berücksichtigt wird.

Bevorzugt handelt es sich bei dem Kalibrierungssignal um die Summe zweier quadrierter Ausgangssignale oder um die Quadratwurzel einer solchen Summe, und ist der Referenzverlauf eine Konstante.

Ein konstanter Referenzverlauf für ein entsprechendes Kalibrierungssignal ist beispielsweise zu erreichen, wenn die beiden Ausgangssignale jeweils einen sinusförmigen Verlauf aufweisen und zueinander einen Phasenversatz von 90° aufweisen. Die durch dieses Kalibrierungssignal angezeigte sogenannte Vektorlänge ist eine relativ einfach zu erhaltende und auszuwertende Grundlage zur Erzeugung einer entsprechenden Korrekturtabelle und/oder -funktion. Auch kann es sich bei dem Kalibrierungssignal um die Summe der Beträge entsprechender Ausgangssignale handeln. Schließlich kann es sich bei dem Kalibrierungssignal auch um Proportionalen zu der Summe zweier quadrierter Ausgangssignale, zu der Quadratwurzel einer solchen Summe und/oder zu der Summe der Beträge entsprechender Ausgangssignale handeln.

Bevorzugt entspricht das Kalibrierungssignal einem Regelsignal, welches dazu vorgesehen ist, jenseits des Kalibrierungsdurchlaufs als Grundlage zur Bewirkung der vorgesehenen Beeinflussung des wenigstens einen Messsignals zu dienen.

Konkret handelt es sich bei dem Kalibrierungssignal nicht um eine frei gewählte Kombination von Ausgangssignalen, sondern um eine spezifische Kombination von Ausgangssignale spezieller Sensoren, welche direkt auch als Grundlage zur vorgesehenen Beeinflussung dient. Dies erleichtert die Erzeugung und Anwendung der Korrekturtabelle und/oder -funktion erheblich. Ein Beispiel hierfür ist die zuvor angesprochene Vektorlänge.

Bevorzugt ist die Korrektureinheit dazu ausgebildet, die Korrekturtabelle und/oder Korrekturfunktion derart zu generieren, dass die hierdurch angezeigte Beeinflussung dazu führt, dass ein entsprechendes Kalibrierungssignal den vorgegebenen Referenzverlauf aufweist.

Damit eignet sich die Korrekturtabelle und/oder -funktion unmittelbar zur Korrektur von durch die Abweichung des Verlaufs des Kalibrierungssignals von dem Referenzverlauf angezeigten unerwünschten Einflüssen während des Kalibrierungsdurchlaufs. Die bereits während des Kalibrierungsdurchlaufs wirkenden Einflüsse können dann für den nachfolgenden Betrieb der Vorrichtung zuverlässig korrigiert werden. Folglich können diese bereits ursprünglich auftretenden Einflüsse bei der Identifizierung und Korrektur von neuen Einflüssen, wie Alterungserscheinungen, während des nachfolgenden Betriebs der Vorrichtung, weitestgehend außer Acht gelassen werden und müssen nicht mühsam von den neu auftretenden Einflüssen separiert werden. Unerwünschte Formen der Messsignale im nachfolgenden Betrieb, also jenseits das Kalibrierungsdurchlaufs, zeigen damit stets neue auftretende Einflüsse an, welche durch eine tatsächliche Veränderung bestimmter Eigenschaften der Vorrichtung oder deren Umgebung bewirkt sind. Dies erleichtert eine Analyse und Identifizierung sowie ggf. Korrektur der neu auftretenden Einflüsse.

Bevorzugt ist die Korrektureinheit dazu ausgebildet, die Korrekturtabelle und/oder Korrekturfunktion derart zu generieren, dass diese auf die Ausgangssignale angewandt, insbesondere direkt oder indirekt im Zuge einer Digitalisierung dieser, wenigstens ein adaptiertes Messsignal ergibt. Die Positionsermittlungseinheit ist dazu ausgebildet, jenseits des Kalibrierungsdurchlaufs das wenigstens eine adaptierte Messsignal zur Ermittlung der Relativposition heranzuziehen.

Wie bereits oben angedeutet kann eine direkte Beeinflussung der Ausgangssignale über das Anlegen eines Grundsignals erfolgen. Auch ist eine analoge relative Verstärkung oder Abschwächung der Ausgangssignale möglich. Dabei kann die Beeinflussung alle Ausgangssignale gleichermaßen betreffen oder sensorspezifisch erfolgen. Eine indirekte Beeinflussung der Ausgangssignale erfolgt insbesondere über eine Variation der Schwellenwerte, welche zur Digitalisierung der Ausgangssignale verwendet werden. Indem dann die adaptierten Messsignale zur Ermittlung der Relativposition verwendet werden, kann die Positionsermittlungseinheit auf herkömmliche Art und Weise arbeiten. Konkret braucht die Positionsbestimmungseinheit keinerlei Kenntnis über die Korrekturtabelle und/oder -funktion zu haben, um korrigierte Positionsinformationen zu erzeugen.

Bevorzugt ist die Positionsermittlungseinheit dazu ausgebildet, bei der Ermittlung der Relativposition auf eine Nachjustierungstabelle und/oder -funktion zurückzugreifen, welche von der durch die Korrektureinheit erzeugten Korrekturtabelle und/oder Korrekturfunktion verschieden ist.

Mit anderen Worten, es gibt eine von der zuvor beschriebenen Korrekturtabelle und/oder -funktion verschiedene Nachjustierungstabelle und/oder -funktion, welche nicht zur Beeinflussung der Messsignale dient, sondern zur Modifikation der Auswertung der Messsignale durch die Positionsermittlungseinheit. Solche an sich bekannte Nachjustierungstabellen und/oder -funktionen dienen zur Korrektur von Einflüssen, welche nicht durch die oben beschriebene Korrekturtabelle und/oder - funktion angezeigt bzw. korrigierbar sind. Eine zusätzliche Berücksichtigung der besagten Nachjustierungstabelle und/oder -funktion ermöglicht die noch genauere Bestimmung der Relativposition.

Bevorzugt sind die beiden Teile lediglich translatorisch oder rotatorisch relativ zueinander beweglich.

Derartige Relativbewegungen sind besonders einfach und zuverlässig auszuwerten.

Bevorzugt handelt es sich bei den Sensoren um optische Sensoren, beispielsweise in Gestalt von Photodioden, kapazitive Sensoren, beispielsweise in Gestalt von Kondensatoren und Spannungsmessern, induktive Sensoren, beispielsweise in Gestalt von Magnetspulen und Strommessern, oder magnetische Sensoren, beispielsweise in Gestalt von Hall-Sensoren. Die Codierung ist entsprechend, insbesondere zumindest optisch, beispielsweise in Gestalt eines Streifens mit schwarzen und weißen Abschnitten mit unterschiedlicher Reflektivität oder in Gestalt eines mit Abschnitten unterschiedlicher Transmissivität, kapazitiv, beispielsweise in Gestalt einer Reihe von unterschiedlich stark geladenen Kondensatoren, oder magnetisch, beispielsweise in Gestalt einer Reihe von Permanentmagneten, ausgebildet.

Die unterschiedlichen Arten der Sensoren und Codierungen bieten unterschiedliche Vor- und Nachteile, welche eine besonders zielgerichtete Ausrichtung der Vorrichtung auf das jeweiligen Einsatzgebiet ermöglichen.

Bevorzugt handelt es sich bei der Codierung um eine periodische Codierung, insbesondere um eine Inkrementalcodierung.

Mit anderen Worten, es handelt sich um eine Codierung, mit einem sich in vorgegebenen Abständen wiederholendem Muster aus entsprechenden Codeabschnitten. Insbesondere können zwei unterschiedliche Arten von Codeabschnitten abwechselnd aneinandergereiht sein, um eine sogenannte Inkrementalcodierung zu bilden. Signale solcher Vorrichtungen sind besonders einfach zu analysieren und in gewünschter Art und Weise zu beeinflussen.

Bevorzugt ist die Korrektureinheit dazu ausgebildet, die Korrekturtabelle und/oder Korrekturfunktion derart zu generieren, dass diese Variationen in einer relativen Positionierung der unterschiedlichen Sensoren und/oder in der Empfindlichkeit der unterschiedlichen Sensoren abbildet und/oder ausgleicht.

Die beiden genannten Beispiele sind systematische Einflüsse, welche erfindungsgemäß besonders einfach zu identifizieren und auszugleichen sind.

Ein erfindungsgemäßes Verfahren zur Ermittlung der Relativposition zwischen zwei relativ zueinander bewegbaren Teilen mittels der zuvor beschriebenen Vorrichtung umfasst die folgenden Schritte: Durchführung eines Kalibrierungsdurchlaufs in Gestalt einer relativen Bewegung der beiden Teile relativ zueinander bei gleichzeitiger Ausgabe entsprechender Ausgangssignale durch die Sensoren; die Erzeugung eines Kalibrierungssignals aus den Ausgangssignalen der Sensoren; den Abgleich des Verlaufs des erzeugten Kalibrierungssignals mit einem vorgegebenen Referenzverlauf; die Generierung einer Korrekturtabelle und/oder einer Korrekturfunktion aus dem Ergebnis des Abgleichs; die Erzeugung von wenigstens einem entsprechend der Korrekturtabelle und/oder Korrekturfunktion beeinflussten Messsignal aus den Ausgangssignalen jenseits des Kalibrierungsdurchlaufs; und die Ermittlung der Relativposition zwischen den beiden Teilen unter Berücksichtigung, insbesondere auf Basis, des wenigstens einen beeinflussten Messsignals.

Dieses Verfahren ermöglicht eine Korrektur erkannter negativer Einflüsse direkt in den Messsignalen und damit noch vor deren Auswertung zur Ermittlung der Relativposition. Es ist damit besonders zuverlässig und einfach zu implementieren.

Bevorzugt umfasst der Kalibrierungsdurchlauf eine Mehrzahl von Richtungsänderungen der relativen Bewegung der beiden Teile relativ zueinander.

Dies ermöglichst es einfacher systematische Fehler bzw. Abweichungen zu identifizieren und eine entsprechende Korrekturtabelle und/oder -funktion zu erzeugen.

Bevorzugt erfolgt der Kalibrierungsdurchlauf bei gleichbleibenden Randbedingungen, insbesondere bei konstanter Temperatur und/oder Beleuchtung.

Hiermit werden vermeidbare Variationen bzw. Einflüsse minimiert und nicht durch die erzeugte Korrekturtabelle und/oder -funktion berücksichtigt. Dies erlaubt es den Fokus auf die Korrektur von systematischen und/oder strukturellen Fehlern bzw. Abweichungen zu legen.

Bevorzugt wird sowohl eine Korrekturfunktion als auch eine Korrekturtabelle generiert. Die Korrekturtabelle umfasst dabei eine Mehrzahl von Werten, welche in die Korrekturfunktion eingesetzt diese lokal spezifizieren.

Somit ist es möglich, eine Korrekturfunktion zu definieren, welche je nach eingegebenen Werten aus der Korrekturtabelle einen wechselnden Verlauf aufweist. Dies ermöglicht eine besonders umfassende Spezifizierung der vorzunehmenden Beeinträchtigung der Messsignale.

Bevorzugt wird eine Korrekturtabelle generiert, welche wenigstens, insbesondere genau, einen Korrekturwert für jede ermittelbare Relativposition zwischen den beiden Teilen enthält.

Dies ermöglicht eine sehr spezifische umfassende Korrektur der Messsignale und damit eine besonders genaue Ermittlung der Relativposition.

Nachfolgend wird die Erfindung rein beispielhaft unter Bezugnahme auf die Zeichnungen beschrieben. Es zeigt:
- Fig. 1: schematisch den Grundaufbau einer Vorrichtung entsprechend des Standes der Technik;
- Fig. 2A: schematisch eine erste erfindungsgemäße Modifikation des in Fig. 1 gezeigten Aufbaus;
- Fig. 2B: schematisch den idealen Verlauf zweier beispielhafter Ausgangssignale und einen Referenzverlauf für ein hieraus erzeugtes beispielhaftes Kalibrierungssignal;
- Fig. 2C: schematisch den realen Verlauf zweier beispielhafter Ausgangssignale und eines hieraus erzeugten beispielhaften Kalibrierungssignals;
- Fig. 3: schematisch eine zweite erfindungsgemäße Modifikation des in Fig. 1 gezeigten Aufbaus;
- Fig. 4: schematisch eine dritte erfindungsgemäße Modifikation des in Fig. 1 gezeigten Aufbaus;

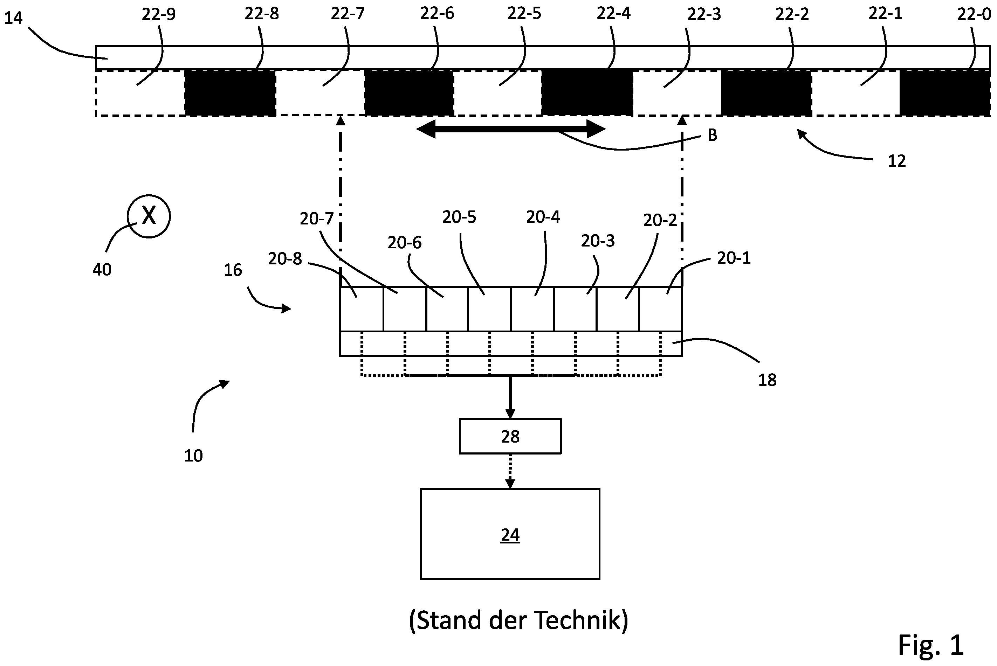

Fig. 1 zeigt schematisch den Grundaufbau von Vorrichtungen 10 zur Positions- oder Längenbestimmung. Die gezeigte Vorrichtung 10 dient als Encoder, beispielsweise in einem Motor-Feedback-System (nicht gezeigt).

Die Vorrichtung 10 umfasst einen ersten Teil 14, an welchem eine Codierung 12 in Gestalt einer Inkrementalcodierung 12 angebracht ist. Die Vorrichtung 10 umfasst ferner einen zweiten Teil 18, an welchem eine Auslesevorrichtung 16 angebracht ist. Die Codierung 12 und die Auslesevorrichtung 16 sind an dem ersten Teil 14 und an dem zweiten Teil 18 derart befestigt, dass sie sich gemeinsam mit den beiden Teilen 14 und 18 relativ zueinander bewegen. Der erste Teil 14 und der zweite Teil 18 - und damit die Codierung 12 sowie die Auslesevorrichtung 16 - sind im vorliegenden Beispiel rein translatorisch relativ zueinander bewegbar (siehe den Doppelpfeil B). Rein rotatorische Relativbewegungen sind für einen Fachmann auch ohne weiteres umzusetzen.

Die Codierung 12 ist durch eine Vielzahl aufeinander folgender Codeabschnitte 22-0 bis 22-9 erster Art (weiß dargestellt) und zweiter Art (schwarz dargestellt) gebildet. In Fig. 1 sind lediglich zehn solcher Codeabschnitte 22-0 bis 22-9 abgebildet. Die Codierung 12 kann zu den abgebildeten Codeabschnitten 22-0 bis 22-9 links und/oder rechts noch weitere Codeabschnitte umfassen. Dies würde eine Bestimmung der Relativposition zwischen den beiden Teilen 14 und 18 über einen größeren Bereich hinweg ermöglichen, als dies mit den abgebildeten zehn Codeabschnitten 22-0 bis 22-9 möglich ist.

Die Auslesevorrichtung 16 umfasst vorliegend acht Sensoren 20-1 bis 20-8, beispielsweise in Gestalt von Photodioden, wobei die Sensoren 20-1 bis 20-8 entlang der Codierung 12 nebeneinander angeordnet sind. Die Sensoren 20-1 bis 20-8 sind auf die Codierung 12 ausgerichtet und zur Erfassung der unterschiedlichen Codeabschnitte 22-0 bis 22-9 der Codierung 12 ausgebildet.

Für eine gleichmäßige Beleuchtung der Codeabschnitte 22-0 bis 22-9 ist eine Lichtquelle 40 vorgesehen, welche zumindest diejenigen Codeabschnitte 22-0 bis 22-9 beleuchtet, welche im Erfassungsbereich der Sensoren 20-1 bis 20-8 (der Bereich zwischen den beiden gestrichelt-doppelgepunkteten Pfeilen) liegen. Jeder der Sensoren 20-1 bis 20-8 empfängt - je nach Art der Codeabschnitte 22-0 bis 22-9 in dessen Erfassungsbereich - eine bestimmte Menge von durch die jeweiligen Codeabschnitte 22-0 bis 22-9 reflektierten (oder transmittierten) Lichts. Die Sensoren 20-1 bis 20-8 geben ein entsprechendes Ausgabesignal, beispielsweise mit einem entsprechenden Spannungs- oder Stromwert aus.

Zur erleichterten Auswertung der Messwerte der Sensoren 20-1 bis 20-8 sind die Codeabschnitte 22-0 bis 22-9 jeweils räumlich identisch zueinander ausgebildet. Vorliegend wird angenommen, dass der Erfassungsbereich jedes Sensors 20-1 bis 20-8 halb so breit ist, wie die einzelnen Codeabschnitte 22-0 bis 22-9 lang sind. Die Sensoren 20-1 bis 20-8 sind derart auf die Codierung 12 ausgerichtet, dass sie einen zusammenhängenden Erfassungsbereich (siehe den Bereich zwischen den gestrichelt-doppelgepunktet Pfeilen in Fig. 1) auf der Codierung 12 abbilden, welcher in seiner Länge gerade der Länge eines Codeworts der Codierung 12 entspricht. Mit anderen Worten, jeder Codeabschnitt 22-4 bis 22-6, welcher vollkommen im Erfassungsbereich der Sensoren 20-1 bis 20-8 liegt, befindet sich im Erfassungsbereich von zumindest zwei, insbesondere drei, benachbarten Sensoren 20-1 bis 20-8. Dies ermöglicht eine besonders feine Abtastung der Codierung 12 und damit eine besonders genaue Auflösung der Relativposition zwischen dem ersten Teil 14 und dem zweiten Teil 18.

Den Sensoren 20-1 bis 20-8 bzw. der Ausleseeinheit ist eine Messsignalerzeugungseinheit 28 nachgeschaltet, um aus den Ausgangssignalen entsprechende Messsignale zu erzeugen. Im einfachsten Fall kann es sich bei der Messsignalerzeugungseinheit 28 um einen oder mehrere Analog-Digital-Umsetzer handeln. Diese erzeugen dann mittels regelmäßigen Abgleichs der Werte der Ausgangssignale mit einem oder mehreren Schwellenwerten digitale Messsignale als digitale Abbilder der Ausgangssignale.

Diese Messsignale können dann in bekannter Art und Weise von einer nachgeschalteten Positionsermittlungseinheit 24 zur Ermittlung der gegenwärtigen Relativposition zwischen den beiden Teilen 14 und 18 herangezogen werden.

Üblicherweise erfolgt die grobe Ermittlung der Relativposition basierend auf Messsignalen zu einer Absolutcodierung, während Messsignale zu einer Inkrementalcodierung zur feinen Nachjustierung der ermittelten Relativposition herangezogen werden. Prinzipiell sind jedoch auch hierzu alternative Ausgestaltungen denkbar.

Nun ist es beispielsweise möglich, dass die Sensoren 20-1 bis 20-8 aufgrund von Fertigungstoleranzen nicht gleichmäßig voneinander beabstandet sind, oder dass die Sensoren fertigungsbedingt unterschiedliche Empfindlichkeiten aufweisen.

Das Ziel der nachfolgend beschrieben Modifikationen dieses Grundaufbaus ist es, eine relativ einfache und zuverlässige Möglichkeit zu liefern, eine Korrektur derartiger systematischer Fehler zu ermöglichen, ohne diese im Detail identifizieren zu müssen und/oder die Auswertung der Messsignale innerhalb der Positionsbestimmungseinheit anpassen zu müssen.

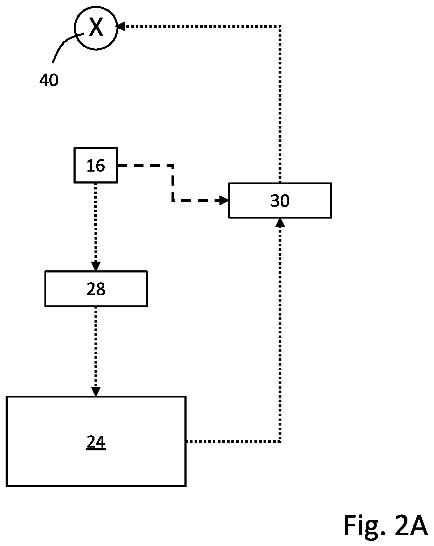

Wie in den Figuren 2A bis 4 dargestellt ist, wird erfindungsgemäß zu den bekannten Komponenten eine Korrektureinheit 30 vorgesehen und auf geeignete Weise in die Vorrichtung eingebunden.

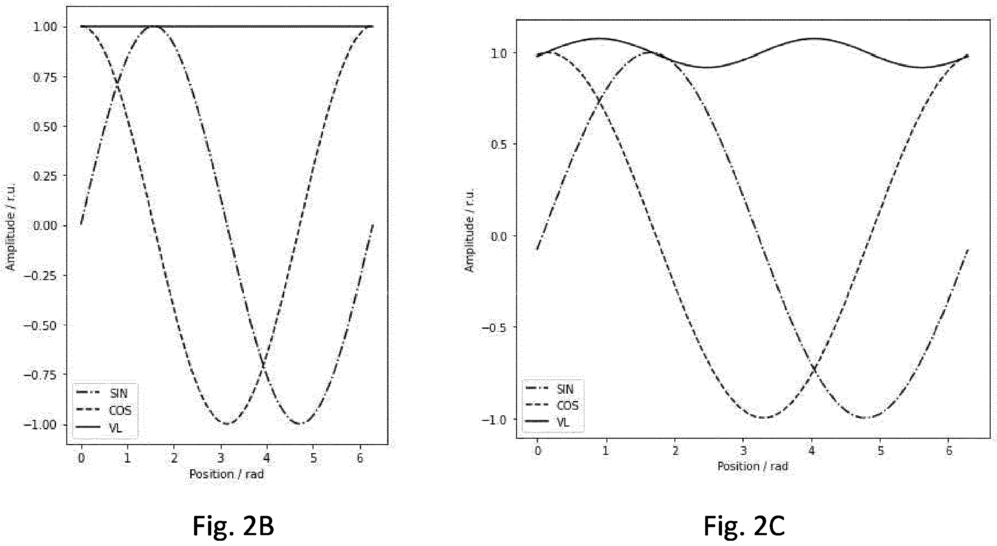

Bezugnehmend auf Fig. 2 kann die Korrektureinheit 30 eingangsseitig mit des Messsignalerzeugungseinheit 28 und der Positionsermittlungseinheit 24 sowie ausgangsseitig mit der Lichtquelle 40, oder einer zugehörigen Steuerung verbunden sein.

Im Kalibrierungsdurchlauf werden bei einer vorgegebenen insbesondere konstanten Beleuchtung durch die Lichtquelle 40 durch die Sensoren 20-1 bis 20-8 der Ausleseeinheit 16 erzeugte Ausgangssignale an die Korrektureinheit 30 übermittelt. Die Korrektureinheit 30 erzeugt aus den erhaltenen Ausgangssignalen ein Kalibrierungssignal und gleicht dessen Verlauf mit einem vorgegebenen Referenzverlauf ab.

Der Referenzverlauf zeigt dabei einen Verlauf an, welcher bei idealen Bedingungen (also ohne systematische Fehler) erwartet würde. Im Falle einer Ausgestaltung, in welcher die Ausgangssignale zweier bestimmter Sensoren einen sinusförmigen Verlauf mit einem Phasenversatz von 90° zueinander aufweisen sollten (vgl. die gestrichelte und die strich-gepunktete Linie in Fig. 2B), könnte als Kalibrierungssignal beispielsweise die Quadratwurzel der Summe der Quadrate der Ausgangssignale dienen. Ein solches Kalibrierungssignal eignet sich insbesondere auch als Regelsignal für die vorgesehene Lichtquelle 40.

Der Referenzverlauf wäre dann eine Konstante (vgl. die durchgezogene Linie in Fig. 2B). Sind die beiden zugehörigen Sensoren nun nicht im richtigen Abstand zueinander angeordnet, führt dies zu einem von 90° verschiedenen Phasenversatz zwischen den beiden Ausgangssignalen (siehe Fig. 2C). Das Kalibrierungssignal aus diesen Ausgangssignalen weist dann einen Verlauf auf, welcher von dem Referenzverlauf abweicht (vergleiche die durchgezogene wellenförmige Linie in Fig. 2C mit der durchgezogenen Linie in Fig 2B). Aus der ermittelten Abweichung des Verlaufs des Kalibrierungssignals von dem Referenzverlauf erzeugt die Korrektureinheit dann eine Korrekturtabelle und/oder -funktion. Diese Korrekturtabelle und/oder -funktion werden derart erzeugt, dass diese als Grundlage für eine Beeinflussung von Messsignalen dienen, welche schließlich zur Bestimmung der Relativposition berücksichtigt werden sollen.

Zurückkommend auf Fig. 2A ist im vorliegenden Beispiel vorgesehen, die Korrektureinheit 30 ausgangsseitig mit der Lichtquelle 40 zu koppeln und über eine spezifische Ansteuerung dieser eine Beeinträchtigung bzw. Modifikation der Messsignale zu erreichen.

Hierfür erzeugt die Korrektureinheit aus dem Ergebnis des Abgleichs eine Korrekturtabelle und/oder -funktion, welche eine derartige Ansteuerung der Lichtquelle 40 ermöglicht, so dass bei sonst gleichen Bedingungen im Zuge eines erneuten Messdurchlaufs das Kalibrierungssignal den erwünschten konstanten Verlauf zeigt. Insbesondere variiert die Korrektureinheit 30 anhand der erzeugten Korrekturtabelle und/oder -funktion die Helligkeit der Lichtquelle 40 derart, dass die Quadratwurzel der Summe der Quadrate des Ausgangssignale der zugehörigen Sensoren konstant ist.

Bei geeigneter Beeinflussung wird somit der beschriebene Fehler in der relativen Positionierung der entsprechenden Sensoren nicht mehr durch die Ausgangssignale und damit durch die Messsignale abgebildet und führt damit nicht zu einem Fehler bei der Bestimmung der Relativposition anhand der neuen Messsignale.

Zur positionsabhängigen Beeinflussung der Messsignale ist die Korrektureinheit 30 eingangsseitig mit der Positionsermittlungseinheit 24 gekoppelt und ermittelt anhand eines Eingangssignal von dieser die jeweils vorzunehmende Korrektur aus der Korrekturtabelle und/oder -funktion.

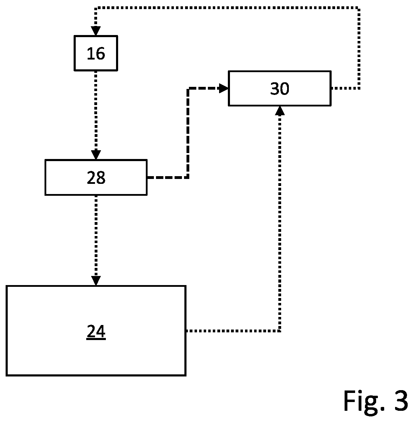

Anstelle der soeben beschriebenen indirekten Beeinflussung der Messsignale mittels einer indirekten Beeinflussung der Ausgangssignale über eine Variation der Beleuchtungsintensität ist auch eine indirekte Beeinflussung der Messsignale mittels einer direkten Beeinflussung der Ausgangssignale möglich, wie dies im Folgenden unter Bezugnahme auf Fig. 3 skizziert wird.

Anstatt nämlich über eine spezifische Ansteuerung der Lichtquelle 40 die Beleuchtungsintensität zu variieren, können die Ausgangssignale der Sensoren 20-1 bis 20-8 der Auswerteinheit 16 mit einem speziell angepassten Korrektursignal überlagert werden. Dies führt dazu, dass die Sensoren eigentlich dasselbe "sehen", wie vor der Korrektur, jedoch Ausgangssignale erzeugt werden, welche denjenigen bei entsprechend der obigen Ausführungsform variierten Beleuchtungsintensität entsprechen. Diese Variante ist besonders für Ausführungsformen relevant, bei welcher die durch die Sensoren 20-1 bis 20-8 überwachten Eigenschaften der Codierung 12 nicht ohne weiteres variiert werden können, wie dies bei der oben beschriebenen optischen Variante möglich ist. Handelt es sich bei den Sensoren nämlich um kapazitive, induktive oder magnetische Sensoren, ist es leichter, ein entsprechendes Korrektursignal an den Sensoren anzulegen, anstatt die Ladung oder Magnetstärke der einzelnen Codeabschnitte 20-0 bis 20-9 zu variieren.

An dieser Stelle sei auch auf die Möglichkeit verwiesen, dass die Korrektureinheit 30 das Kalibrierungssignal aus Messsignalen erzeugen kann, welche sie von der Messsignalerzeugungseinheit 28 erhält. Dies ist besonders dann von Relevanz, wenn es sich bei der Messsignalerzeugungseinheit 28 im Wesentlichen um einen Analog-Digital-Umsetzer handelt.

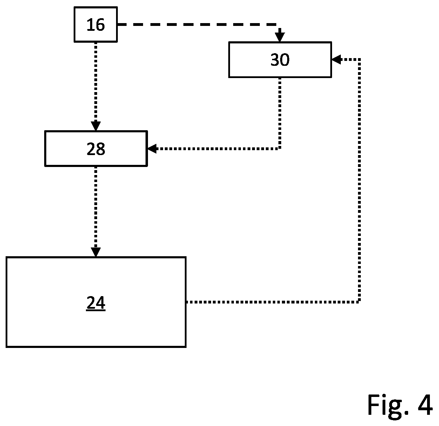

Als Beispiel für eine direkte Beeinflussung der Messsignale sei auf Fig. 4 verwiesen. In der dortigen Ausgestaltung ist die Korrektureinheit 30 ausgangsseitig mit der Messsignalerzeugungseinheit 28 gekoppelt, um deren Betrieb dieser basierend auf der Korrekturtabelle und/oder -funktion zu beeinflussen bzw. zu modifizieren.

In der beispielhaften Ausgestaltung, bei welcher es sich bei der Messsignalerzeugungseinheit 28 im Wesentlichen um einen Analog-Digital-Umwandler handelt, kann die Korrektureinheit 30 entsprechend der erzeugten Korrekturtabelle und/oder -funktion die zur Digitalisierung der Ausgangssignale verwendeten Schwellenwerte modifizieren und damit die erhaltenen Messsignale direkt beeinflussen.

In jeder der drei Varianten werden jenseits des Kalibrierungsdurchlaufs, also in einem "Normalbetrieb" der Vorrichtung, lediglich die beeinflussten bzw. modifizierten Messsignale bei der Ermittlung der Relativposition berücksichtigt. Eine Beeinflussung oder Modifikation dieser Ermittlung durch die Korrektureinheit und/oder anhand der beschriebenen Korrekturtabelle und/oder -funktion erfolgt erfindungsgemäß nicht. Eine Spezifizierung dieser Ermittlung basierend auf einer anderweitig erzeugten Nachjustierungstabelle und/oder -funktion ist jedoch auch nicht pauschal ausgeschlossen.

Die Korrektureinheit 30 kann mit der Messsignalerzeugungseinheit 28 und/oder der Positionsermittlungseinheit 24 zur Bildung einer gemeinsamen Recheneinheit kombiniert sein, oder separat von diesen vorgesehen sein.

Je höher die Frequenz ist, mit welcher die Korrektureinheit 30 geeignete Beeinflussungen der Messsignale bewirkt, desto genauer ist die anhand der beeinflussten Messsignalen ermittelbare Relativposition.

Eine Korrekturtabelle kann eine Ansammlung von "Stützstellen" umfassen, welche interpoliert eine entsprechende Korrekturfunktion erzeugen. Auch kann eine entsprechende Korrekturfunktion Parameter zu Spezifizierung einer entsprechenden Korrekturfunktion umfassen. Beispielsweise könnte eine Korrekturtabelle einen oder mehrere Werte für die Amplitude und einen oder mehrere Werte für die Wellenlänge (und gegebenenfalls ein Wert für einen Phasenversatz) zu Spezifizierung eines Sinussignals umfassen.

Die Korrektureinheit kann auch dazu ausgebildet sein, aus einen oder mehreren unterschiedlichen Kalibrierungssignalen unterschiedliche Fehlerquellen und/oder - muster zu ermitteln und für diese separate Korrekturwerte und/oder -funktionen zu erzeugen, welche dann schließlich kombiniert die gewünschte Beeinflussung der Messsignale bewirken. Hierfür kann als Grundlage ein vorgegebenes oder durch maschinelles lernen bestimmtes Modell verwendet werden.

### Bezugszeichenliste

- 10: Vorrichtung zur Positions-, Längen-, oder Winkelbestimmung
- 12: Codierung
- 14: erster Teil
- 16: Auslesevorrichtung
- 18: zweiter Teil
- 20-1 bis20-8: Sensoren
- 22-0 bis22-9: Codeabschnitte
- 24: Positionsermittlungseinheit
- 28: Messsignalerzeugungseinheit
- 30: Korrektureinheit
- 40: Lichtquelle

## Patentansprüche

1. Vorrichtung (10), insbesondere zur Positions-, Längen-, oder Winkelbestimmung, umfassend:
- einen ersten und einen zweiten Teil (14, 18), welche relativ zueinander bewegbar sind;
- eine an dem ersten Teil (14) angebrachte Codierung (12) mit einer Vielzahl von Codeabschnitten (22-0 bis 22-9) erster Art und zweiter Art;
- eine an dem zweiten Teil (18) angebrachte Auslesevorrichtung (16) zur Erfassung zumindest eines Teils der Codierung (12), wobei die Auslesevorrichtung (16) mehrere Sensoren (20-1 bis 20-8) umfasst, welche jeweils zur Erfassung der einzelnen Codeabschnitte (22-0 bis 22-9) ausgebildet sind und ein entsprechendes Ausgangssignal auszugeben,
- eine Messsignalerzeugungseinheit (28), welche ausgebildet ist, aus den jeweiligen Ausgangssignalen wenigstens ein entsprechendes Messsignal zu erzeugen; und
- eine Positionsermittlungseinheit (24), welche dazu ausgebildet ist, unter Berücksichtigung, insbesondere auf Basis, des wenigstens einen Messsignals eine Relativposition zwischen dem ersten und dem zweiten Teil (14, 18) zu ermitteln;
**dadurch gekennzeichnet, dass**
die Vorrichtung (10) ferner eine Korrektureinheit (30) umfasst, welche dazu ausgebildet ist, eine, insbesondere direkte oder indirekte, Beeinflussung des Verlaufs des wenigstens einen Messsignals zu bewirken, bevor dieses durch die Positionsermittlungseinheit (24) zur Bestimmung der Relativposition herangezogen wird;
wobei die Korrektureinheit (30) dazu ausgebildet ist, in einem Kalibrierungsdurchlauf eine bekannte vordefinierte, insbesondere konstante und/oder gleichbleibende, Beeinflussung der Messsignale zu bewirken sowie aus den Ausgangssignalen der Sensoren (20-1 bis 20-8) während des Kalibrierungsdurchlaufs ein Kalibrierungssignal zu erzeugen, den Verlauf des erzeugten Kalibrierungssignals mit einem vorgegebenen Referenzverlauf abzugleichen und aus dem Ergebnis des Abgleichs eine Korrekturtabelle und/oder einer Korrekturfunktion zu generieren;
wobei die Korrektureinheit (30) ferner dazu ausgebildet ist, jenseits des Kalibrierungsdurchlaufs eine Beeinflussung des Verlaufs des wenigstens einen Messsignals entsprechend der generierten Korrekturtabelle und/oder Korrekturfunktion zu bewirken.

2. Vorrichtung (10) nach Anspruch 1,
wobei es sich bei dem Kalibrierungssignal um die Summe zweier quadrierter Ausgangssignale oder um die Quadratwurzel einer solchen Summe handelt und der Referenzverlauf eine Konstante ist.

3. Vorrichtung (10) nach Anspruch 1 oder 2,
wobei das Kalibrierungssignal einem Regelsignal entspricht, welches dazu vorgesehen ist, jenseits des Kalibrierungsdurchlaufs als Grundlage zur Bewirkung der vorgesehenen Beeinflussung des wenigstens einen Messsignals zu dienen.

4. Vorrichtung (10) nach einem der vorangehenden Ansprüche,
wobei die Korrektureinheit (30) dazu ausgebildet ist, die Korrekturtabelle und/oder Korrekturfunktion derart zu generieren, dass die hierdurch angezeigte Beeinflussung dazu führt, dass ein entsprechendes Kalibrierungssignal den vorgegebenen Referenzverlauf aufweist.

5. Vorrichtung (10) nach einem der vorangehenden Ansprüche,
wobei die Korrektureinheit (30) dazu ausgebildet ist, die Korrekturtabelle und/oder Korrekturfunktion derart zu generieren, dass diese auf die Ausgangssignale angewandt, insbesondere direkt durch Überlagerung oder indirekt im Zuge einer Digitalisierung dieser, wenigstens ein adaptiertes Messsignal ergeben;
wobei die Positionsermittlungseinheit (24) dazu ausgebildet ist, jenseits des Kalibrierungsdurchlaufs das wenigstens eine adaptierte Messsignal zur Ermittlung der Relativposition heranzuziehen.

6. Vorrichtung (10) nach einem der vorangehenden Ansprüche,
wobei die Positionsermittlungseinheit (24) dazu ausgebildet ist, bei der Ermittlung der Relativposition auf eine Nachjustierungstabelle und/oder -funktion zurückzugreifen, welche von der durch die Korrektureinheit erzeugten Korrekturtabelle und/oder Korrekturfunktion verschieden ist.

7. Vorrichtung (10) nach einem der vorangehenden Ansprüche,
wobei die beiden Teile (14, 18) lediglich translatorisch oder rotatorisch relativ zueinander beweglich sind.

8. Vorrichtung (10) nach einem der vorangehenden Ansprüche,
wobei es sich bei den Sensoren (20-1 bis 20-8) um optische, kapazitive, induktive oder magnetische Sensoren handelt und die Codierung (12) entsprechend, insbesondere zumindest optisch, kapazitiv oder magnetisch, ausgebildet ist.

9. Vorrichtung (10) nach einem der vorangehenden Ansprüche,
wobei es sich bei der Codierung (12) um eine periodische Codierung, insbesondere um eine Inkrementalcodierung, handelt.

10. Vorrichtung (10) nach einem der vorangehenden Ansprüche,
wobei die Korrektureinheit (30) dazu ausgebildet ist, die Korrekturtabelle und/oder Korrekturfunktion derart zu generieren, dass diese Variationen in einer relativen Positionierung der unterschiedlichen Sensoren (20-1 bis 20-8) und/oder in der Empfindlichkeit der unterschiedlichen Sensoren (20-1 bis 20-8) abbildet und/oder ausgleicht.

11. Verfahren zur Ermittlung der Relativposition zwischen zwei relativ zueinander bewegbaren Teilen (14, 18) mittels einer Vorrichtung (10) nach einem der vorangehenden Ansprüche, wobei das Verfahren die folgenden Schritte umfasst:
die Durchführung eines Kalibrierungsdurchlaufs in Gestalt einer relativen Bewegung der beiden Teile (14, 18) relativ zueinander bei gleichzeitiger Ausgabe entsprechender Ausgangssignale durch die Sensoren (20-1 bis 20-8);
die Erzeugung des Kalibrierungssignals aus den Ausgangssignalen der Sensoren (20-1 bis 20-8);
den Abgleich des Verlaufs des erzeugten Kalibrierungssignals mit dem vorgegebenen Referenzverlauf;
die Generierung einer Korrekturtabelle und/oder einer Korrekturfunktion aus dem Ergebnis des Abgleichs;
die Erzeugung von wenigstens einem entsprechend der Korrekturtabelle und/oder Korrekturfunktion beeinflussten Messsignal aus den Ausgangssignalen jenseits des Kalibrierungsdurchlaufs; und
die Ermittlung der Relativposition zwischen den beiden Teilen (14,18) unter Berücksichtigung, insbesondere auf Basis, des wenigstens einen beeinflussten Messsignals.

12. Verfahren nach Anspruch 11,
wobei der Kalibrierungsdurchlauf eine Mehrzahl von Richtungsänderungen einer relativen Bewegung der beiden Teile (14, 18) relativ zueinander umfasst.

13. Verfahren nach Anspruch 11 oder 12,
wobei der Kalibrierungsdurchlauf bei gleichbleibenden Randbedingungen, insbesondere bei konstanter Temperatur und/oder Beleuchtung, erfolgt.

14. Verfahren nach einem der vorangehenden Ansprüche 11 bis 13,
wobei sowohl eine Korrekturfunktion als auch eine Korrekturtabelle generiert wird,
wobei die Korrekturtabelle eine Mehrzahl von Werten umfasst, welche in die Korrekturfunktion eingesetzt diese lokal spezifizieren.

15. Verfahren nach einem der vorangehenden Ansprüche 11 bis 14,
wobei eine Korrekturtabelle generiert wird, welche wenigstens, insbesondere genau, einen Korrekturwert für jede ermittelbare Relativposition zwischen den beiden Teilen (14, 18) enthält.

## Claims

1. An apparatus (10), in particular for position, length or angle determination, comprising:
- a first and a second part (14, 18) which are movable relative to one another;
- a coding (12) which is applied to the first part (14) and which has a plurality of code sections (22-0 to 22-9) of a first kind and a second kind;
- a readout apparatus (16), which is attached to the second part (18), for detecting at least one part of the coding (12), wherein the readout apparatus (16) comprises a plurality of sensors (20-1 to 20-8) which are each configured to detect the individual code sections (22-0 to 22-9) and to output a corresponding output signal;
- a measurement signal generating unit (28) which is configured to generate at least one corresponding measurement signal from the respective output signals; and
- at position determining unit (24) which is configured to determine a relative position between the first and the second part (14, 18), taking into account, in particular on the basis of, the at least one measurement signal,
**characterized in that**
the apparatus (10) further comprises a correction unit (30) which is configured to effect an influencing, in particular a direct or indirect influencing, of the course of the at least one measurement signal before the latter is used by the position determining unit (24) to determine the relative position;
wherein the correction unit (30) is configured to effect a known predefined influencing, in particular a constant and/or unchanging influencing, of the measurement signals in a calibration run-through and to generate a calibration signal from the output signals of the sensors (20-1 to 20-8) during the calibration run-through, to compare the course of the generated calibration signal with a predefined reference course and to generate a correction table and/or a correction function from the result of the comparison;
wherein the correction unit (30) is further configured to effect an influencing of the course of the at least one measurement signal beyond the calibration run-through in accordance with the generated correction table and/or correction function.

2. An apparatus (10) according to claim 1,
wherein the calibration signal is the sum of two squared output signals or the square root of such a sum and the reference course is a constant.

3. An apparatus (10) according to claim 1 or 2,
wherein the calibration signal corresponds to a control signal which is provided to serve as the basis for effecting the intended influencing of the at least one measurement signal beyond the calibration run-through.

4. An apparatus (10) according to any one of the preceding claims,
wherein the correction unit (30) is configured to generate the correction table and/or correction function such that the hereby displayed influencing results in a corresponding calibration signal having the predefined reference course.

5. An apparatus (10) according to any one of the preceding claims,
wherein the correction unit (30) is configured to generate the correction table and/or correction function such that the latter, when it is applied to the output signals, in particular directly by a superposition of said output signals or indirectly in the course of a digitization of said output signals, results in least one adapted measurement signal;
wherein the position determining unit (24) is configured to use the at least one adapted measurement signal to determine the relative position beyond the calibration run-through.

6. An apparatus (10) according to any one of the preceding claims,
wherein the position determining unit (24) is configured, when determining the relative position, to use a readjustment table and/or readjustment function which is different from the correction table and/or correction function generated by the correction unit.

7. An apparatus (10) according to any one of the preceding claims,
wherein the two parts (14, 18) are only movable in a translatory or rotary manner relative to one another.

8. An apparatus (10) according to any one of the preceding claims,
wherein the sensors (20-1 to 20-8) are optical, capacitive, inductive or magnetic sensors and the coding (12) is designed accordingly, in particular at least optically, capacitively or magnetically.

9. An apparatus (10) according to any one of the preceding claims,
wherein the coding (12) is a periodic coding, in particular an incremental coding.

10. An apparatus (10) according to any one of the preceding claims,
wherein the correction unit (30) is configured to generate the correction table and/or correction function such that the latter maps and/or compensates for variations in a relative positioning of the different sensors (20-1 to 20-8) and/or in the sensitivity of the different sensors (20-1 to 20-8).

11. A method for determining the relative position between two parts (14, 18) movable relative to one another by means of an apparatus (10) according to one of the preceding claims, wherein the method comprises the following steps:
performing a calibration run-through in the form of a relative movement of the two parts (14, 18) relative to one another with a simultaneous output of corresponding output signals by the sensors (20-1 to 20-8);
generating the calibration signal from the output signals of the sensors (20-1 to 20-8);
comparing the course of the generated calibration signal with the predefined reference course;
generating a correction table and/or a correction function from the result of the comparison;
generating at least one measurement signal, which is influenced in accordance with the correction table and/or correction function, from the output signals beyond the calibration run-through; and
determining the relative position between the two parts (14, 18) taking into account, in particular on the basis of, the at least one influenced measurement signal.

12. A method according to claim 11,
wherein the calibration run-through comprises a plurality of changes in direction of a relative movement of the two parts (14, 18) relative to one another.

13. A method according to claim 11 or 12,
wherein the calibration run-through takes place under constant boundary conditions, in particular under a constant temperature and/or lighting.

14. A method according to any one of the preceding claims 11 to 13,
wherein both a correction function and a correction table are generated, wherein the correction table comprises a plurality of values which, when they are inserted into the correction function, specify the correction function locally.

15. A method according to any one of the preceding claims 11 to 14,
wherein a correction table is generated that contains at least one correction value, in particular exactly one correction value, for each determinable relative position between the two parts (14, 18).

## Revendications

1. Dispositif (10), en particulier pour la détermination de la position, de la longueur ou de l'angle, comprenant :
- une première et une seconde partie (14, 18), qui sont mobiles l'une par rapport à l'autre ;
- un codage (12) fixé à la première partie (14) et comportant une pluralité de sections de code (22-0 à 22-9) d'un premier type et d'un second type ;
- un dispositif de lecture (16) fixé à la seconde partie (18) et destiné à détecter au moins une partie du codage (12), le dispositif de lecture (16) comprenant plusieurs capteurs (20-1 à 20-8) qui sont chacun conçus pour détecter les sections de code individuelles (22-0 à 22-9) et pour émettre un signal de sortie correspondant ;
- une unité de génération de signal de mesure (28) conçue pour générer au moins un signal de mesure correspondant à partir des signaux de sortie respectifs ; et
- une unité de détermination de position (24) conçue pour déterminer une position relative entre les première et seconde parties (14, 18) en tenant compte, et en particulier en se basant sur, ledit au moins un signal de mesure ;
**caractérisée en ce que**
le dispositif (10) comprend en outre une unité de correction (30) conçue pour exercer une influence, en particulier directe ou indirecte, sur la courbe dudit au moins un signal de mesure avant qu'il ne soit utilisé par l'unité de détermination de position (24) pour déterminer la position relative ;
l'unité de correction (30) étant conçue pour exercer une influence connue, prédéfinie, en particulier constante et/ou uniforme, sur les signaux de mesure pendant une phase d'étalonnage, et pour générer un signal d'étalonnage à partir des signaux de sortie des capteurs (20-1 à 20-8) pendant la phase d'étalonnage, pour comparer la courbe du signal d'étalonnage généré à une courbe de référence prédéterminée, et pour générer une table de correction et/ou une fonction de correction à partir du résultat de la comparaison ;
l'unité de correction (30) étant en outre conçue pour exercer une influence sur la courbe dudit au moins un signal de mesure en dehors de la phase d'étalonnage, conformément à la table de correction et/ou à la fonction de correction générée(s).

2. Dispositif (10) selon la revendication 1,
dans lequel le signal d'étalonnage est la somme de deux signaux de sortie au carré ou la racine carrée d'une telle somme, et la courbe de référence est une constante.

3. Dispositif (10) selon la revendication 1 ou 2,
dans lequel le signal d'étalonnage correspond à un signal de commande, destiné à servir de base pour exercer l'influence prévue sur ledit au moins un signal de mesure en dehors de la phase d'étalonnage.

4. Dispositif (10) selon l'une des revendications précédentes,
dans lequel l'unité de correction (30) est conçue pour générer la table de correction et/ou la fonction de correction de telle sorte que l'influence résultante amène un signal d'étalonnage correspondant à présenter la courbe de référence prédéterminée.

5. Dispositif (10) selon l'une des revendications précédentes,
dans lequel l'unité de correction (30) est conçue pour générer la table de correction et/ou la fonction de correction de telle sorte que, lorsqu'elles sont appliquées aux signaux de sortie, en particulier directement par superposition ou indirectement au cours d'une numérisation de ceux-ci, elles donnent au moins un signal de mesure adapté ;
l'unité de détermination de position (24) est conçue pour utiliser ledit au moins un signal de mesure adapté afin de déterminer la position relative, en dehors de la phase d'étalonnage.

6. Dispositif (10) selon l'une des revendications précédentes,
dans lequel l'unité de détermination de position (24) est conçue pour avoir recours à une table et/ou une fonction de réajustement lors de la détermination de la position relative, qui est différente de la table de correction et/ou de la fonction de correction générée(s) par l'unité de correction.

7. Dispositif (10) selon l'une des revendications précédentes,
dans lequel les deux parties (14, 18) ne peuvent se déplacer l'une par rapport à l'autre que par translation ou rotation.

8. Dispositif (10) selon l'une des revendications précédentes,
dans lequel les capteurs (20-1 à 20-8) sont des capteurs optiques, capacitifs, inductifs ou magnétiques, et le codage (12) est conçu de manière correspondante, en particulier au moins par voie optique, capacitive ou magnétique.

9. Dispositif (10) selon l'une des revendications précédentes,
dans lequel le codage (12) est un codage périodique, en particulier un codage incrémental.

10. Dispositif (10) selon l'une des revendications précédentes,
dans lequel l'unité de correction (30) est conçue pour générer la table de correction et/ou la fonction de correction de manière à modéliser et/ou à compenser les variations quant à un positionnement relatif des différents capteurs (20-1 à 20-8) et/ou quant à la sensibilité des différents capteurs (20-1 à 20-8).

11. Procédé de détermination de la position relative entre deux parties (14, 18) mobiles l'une par rapport à l'autre au moyen d'un dispositif (10) selon l'une des revendications précédentes, le procédé comprenant les étapes suivantes consistant à :
réaliser une phase d'étalonnage sous la forme d'un mouvement relatif des deux parties (14, 18) l'une par rapport à l'autre, avec émission simultanée des signaux de sortie correspondants par les capteurs (20-1 à 20-8) ;
générer le signal d'étalonnage à partir des signaux de sortie des capteurs (20-1 à 20-8) ;
comparer la courbe du signal d'étalonnage généré à la courbe de référence prédéterminée ;
générer une table de correction et/ou une fonction de correction à partir du résultat de la comparaison ;
générer au moins un signal de mesure, influencé selon la table de correction et/ou la fonction de correction, à partir des signaux de sortie, en dehors de phase d'étalonnage ; et
déterminer la position relative entre les deux parties (14, 18) en tenant compte, en particulier en se basant sur, ledit au moins un signal de mesure influencé.

12. Procédé selon la revendication 11,
dans lequel la phase d'étalonnage comprend une pluralité de changements de direction d'un mouvement relatif des deux parties (14, 18) l'une par rapport à l'autre.

13. Procédé selon la revendication 11 ou 12,
dans lequel la phase d'étalonnage est réalisée dans des conditions aux limites constantes, en particulier à température constante et/ou à éclairage constant.

14. Procédé selon l'une des revendications précédentes 11 à 13,
dans lequel aussi bien une fonction de correction qu'une table de correction sont générées,
la table de correction comprend une pluralité de valeurs qui, lorsqu'elles sont insérées dans la fonction de correction, la spécifient localement.

15. Procédé selon l'une des revendications précédentes 11 à 14,
dans lequel une table de correction est générée, laquelle contient au moins une, en particulier précisément une, valeur de correction pour chaque position relative déterminable entre les deux parties (14, 18).
